# EUROPÄISCHE PATENTSCHRIFT

(11) **EP 0 557 793 B1**
(45) Veröffentlichungstag und Bekanntmachung des Hinweises auf die Patenterteilung: **05.06.1996**
(21) Anmeldenummer: 93102027.5
(22) Anmeldetag: 10.02.1993
(51) Int. Cl.: C08J 3/14, C08F 8/32, C08F 8/48, C08L 33/26

(54) **Verfahren zur Erzeugung teilchenförmiger Poly(meth)acrylimid-Polymerisate**
Process for producing poly(meth)acrylimide polymers in particle shape
Procédé d'obtention de polymères de poly(méth)acrylimide sous forme de particules

(30) Priorität: 26.02.1992 DE 4205882
(43) Veröffentlichungstag der Anmeldung: 01.09.1993
(73) Patentinhaber: BASF Aktiengesellschaft, D-67063 Ludwigshafen (DE)
(72) Erfinder: Besecke, Siegmund, Dr., W-3250 Hameln (DE); Deckers, Andreas, Dr., W-6700 Ludwigshafen (DE); Fischer, Hermann, Dr., W-6703 Limburgerhof (DE); Neufeld, Eckhard, W-6703 Limburgerhof (DE)

(56) Entgegenhaltungen:
- EP-A- 0 274 098
- FR-A- 2 325 692
- US-A- 4 246 374

## Beschreibung

Die Erfindung betrifft Verfahren zur Erzeugung teilchenförmiger Polymerisate, erhältlich durch Umsetzung eines Polymeren auf Basis von C₁-C₂₂-Alkylestern der Acryl- und/ oder Methacrylsäure mit Ammoniak und/oder mindestens einem primären Amin RNH₂.

Ferner betrifft die Erfindung die Verwendung dieser teilchenförmigen Polymerisate zur Herstellung von Formkörpern, wobei unter Formkörpern auch Folien und Fasern mitgezählt werden, sowie Formkörper aus diesen teilchenförmigen Polymerisaten.

Zur Erhöhung der Wärmeformbeständigkeit von Acrylat-Formmassen, insbesondere von Polymethylmethacrylat ("PMMA"), kann man diese in einer polymeranalogen Umsetzung mit primären Aminen unter Ausbildung zyklischer Imidstrukturen zur Reaktion bringen. Dies kann sowohl in Schmelze als auch in Lösung erfolgen.

So wird beispielsweise in der US-A 2,146,209 die Herstellung von imidhaltigen Polymeren durch Umsetzung von PMMA mit Ammoniak, Harnstoff sowie dessen Derivaten und aliphatischen Aminen beschrieben.

Um die Gelbstichigkeit zu vermindern sowie um die Transparenz der Produkte aus der US-A 2,146,209 zu verbessern, wurde in der EP-B 234,726 vorgeschlagen, die Imidisierung in einem Lösungsmittelgemisch bestehend aus einem aromatischen Kohlenwasserstoff und einem aliphatischen Alkohol durchzuführen.

In der US-A 4,246,374 wird die Herstellung thermisch stabiler Polyglutarimide durch Umsetzung von PMMA-Schmelzen mit Ammoniak oder primären Aminen auf einem Entgasungsextruder beschrieben.

Nachteilig an den genannten Polymethacryl- und Polyacrylimiden ("Poly (meth) acrylimiden") sind ihre unzufriedenstellenden Werte in der Wärmeformbeständigkeit, der chemischen Beständigkeit, der Spannungsrißbeständigkeit, ihre begrenzte Mischbarkeit mit anderen Polymeren, ihr Fließverhalten sowie eine zu hohe Wasseraufnahme bei gleichzeitig sehr guten Werten in der Transparenz und der Witterungsstabilität.

Bei der Weiterverarbeitung dieser Poly (meth) acrylimide ist es bislang erforderlich vor der endgültigen Formgebung, Lösungsmittel sowie niedermolekulare Verunreinigungen und Nebenprodukte aus dem Reaktionsgemisch zu entfernen, um die Gebrauchseigenschaften des Poly (meth) acrylimids nicht zu beeinträchtigen.

Eine destillative Abtrennung beispielsweise über Verdampfer oder Entgasungsextruder ist einerseits sehr zeit- und energieaufwendig und andrerseits bei höhersiedenden Komponenten nicht oder nur unvollständig möglich. Zudem führen längere Verweilzeiten bei erhöhten Temperaturen zu Beeinträchtigungen der Polymereigenschaften sowie zu unerwünschten Verfärbungen.

Eine weitere Möglichkeit ein reines Produkt zu erhalten besteht in der Ausfällung der Poly (meth) acrylimide aus ihren Lösungen mit Fällungsmitteln, d.h. in der Regel Lösungsmitteln, in denen die Poly (meth) acrylimide nicht löslich oder schwerlöslich sind. Nachteilig an dieser Methode sind der Bedarf an großen Mengen dieser Fällungsmittel (im allgemeinen 5 bis 10facher Überschuß, bezogen auf das Lösungsmittel, in dem das Polymer gelöst ist), die aufwendige Regenerierung der großen Mengen angefallener Filtrate sowie die schlechte Handhabbarkeit des in der Regel sehr fein aus-fallenden und damit voluminösen Polymeren. Bei grobkörnigen Ausfällungen hat man oft das Problem von Einschlüssen an Restlösungsmitteln und Nebenprodukten.

Aus der DE-OS 3,644,464 ist die Isolierung von aromatischen Polykondensaten, beispielsweise von aromatischen Polyarylethern wie Polysulfonen, aus polaren, aprotischen Lösungsmitteln durch "Zertropfen", d.h. Bildung von Tropfen in einem Fällungsmittel wie Wasser oder einer Mischung aus Wasser und einem Alkohol unter definierten Bedingungen beschrieben. Nach dem dort genannten Verfahren erhält man mittlere Teilchendurchmesser von 0,2 bis 2 mm, wobei die Teilchen zudem eine offenzellige Porenstruktur aufweisen. Die so erhaltenen Teilchen kann man dadurch gut von Lösungsmittelresten durch gängige Verfahren, z.B. durch Extraktion, befreien. Ein Hinweis, wie man nach dieser Methode teilchenförmige Poly(meth)acrylimide herstellen kann, findet sich in dieser Druckschrift nicht.

Der Erfindung lag daher die Aufgabe zugrunde, ein Verfahren zur Erzeugung von teilchenförmigen Poly(meth)acrylimiden zur Verfügung zu stellen, in dem die oben genannten Nachteile nicht auftreten.

Demgemäß wurde ein Verfahren zur Erzeugung von teilchenförmigen Poly(meth)acrylimiden der eingangs erwähnten Art gefunden, das dadurch gekennzeichnet ist, daß man
A) eine Lösung der Polymerisate aus einer Düse in einer Vielzahl von Flüssigkeitsstrahlen austreten läßt,
B) durch Versetzen der Düse in longitudinale oder transversale Schwingungen oder durch Pulsieren der Flüssigkeit in der Düse oder durch Vorsehen einer Wegstrecke zwischen Austritt aus der Düse und Eintritt in ein Fällungsbad einen Strahlzerfall des Flüssigkeitsstrahls in Tropfen mit enger Korngrößenverteilung herbeiführt,
C) die erzeugten Tropfen durch Einbringen in ein Fällungsbad, welches eine Flüssigkeit enthält, in der sich die Polymerisate nicht lösen, ausfällt und
D) in den Polymerpartikeln enthaltene Lösungsmittelreste und sonstige Verunreinigungen entfernt.

Außerdem wurden die Verwendung der hierdurch erzeugten teilchenförmigen Poly(meth)acrylimide zur Herstellung von Formkörpern, Fasern oder Folien gefunden.

Unter den Polymerisaten auf Basis von C₁-C₂₂-Alkylestern der (Meth) Acrylsäure sind sowohl Homo- als auch Copolymere zu verstehen, wobei die Copolymeren noch andere ethylenisch ungesättigte Comonomere enthalten können.

Als C₁-C₂₂-Alkylester der Methacrylsäure kommen bevorzugt die C₁-C₄-Alkylester wie Methylmethacrylat ("MMA"), Ethylmethacrylat, Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als C₁-C₂₂-Alkylester der Acrylsäure verwendet man bevorzugt die C₁-C₄-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als ethylenisch ungesättigte Comonomere kann man Acrylsäure, Methacrylsäure, Maleinsäurederivate wie Imide und C₁-C₁₀-Alkylester, Itaconsäurederivate wie Imide und C₁-C₁₀-Alkylester, Acryl- und Methacrylnitril, Styrol, α-Methylstyrol, Ethylen, Propylen und Butadien sowie Mischungen dieser Monomeren einsetzen.

Die Polymerisate können ein- oder mehrstufig hergestellt werden, wobei bei mehrstufiger Polymerisation wenigstens die äußere Stufe Gruppen enthalten muß, die imidisiert werden können.

Im allgemeinen sind die Polymerisate zu mehr als 50, bevorzugt zu mehr als 80 Gew.-% aus C₁-C₂₂-Alkylestern der Methacrylsäure und Acrylsäure aufgebaut. Als besonders vorteilhaft haben sich nach bisherigen Beobachtungen Polymerisate aus 80 bis 100 Gew.-% Methylmethacrylat und 0 bis 20 Gew.-% Methylacrylat mit einem Molekulargewicht (Gewichtsmittelwert M_{W}) im Bereich von 20.000 bis 300.000 g/mol erwiesen.

Als Imidisierungsreagenzien kommen neben Ammoniak primäre Amine, RNH₂, zur Anwendung. Beispielhaft seien genannt C₁-C₂₂-Alkylamine wie Methylamin, Ethylamin, n-Propylamin, i-Propylamin, n-Butylamin, 1-Methylpropylamin, 2-Methylpropylamin, 1,1-Dimethylethylamin, n-Pentylamin, 1-Methylbutylamin, 2-Methylbutylamin, 3-Methylbutylamin, 2-Dimethylpropylamin, 1-Ethylpropylamin, n-Hexylamin, n-Heptylamin, n-Octylamin, n-Nonylamin, n-Decylamin, n-Undecylamin, n-Dodecylamin und Stearylamin, bevorzugt Methylamin.

C₅-C₈-Cycloalkylamine wie Cyclopentylamin, Cyclohexylamin, Cycloheptylamin oder Cyclooctylamin, bevorzugt Cyclohexylamin, wobei die Cycloalkylreste bis zu dreifach mit Resten, ausgewählt aus der Gruppe bestehend aus C₁-C₄-Alkyl,
C₁-C₄-Alkoxy und Halogen wie Fluor, Chlor und Brom, substituiert sein können,
C₆-C₁₀-Arylamine, wobei die Aryl-Reste bis zu dreifach mit Resten, ausgewählt aus der Gruppe bestehend aus C₁-C₄-Alkyl, C₁-C₄-Alkoxy und Halogen wie Fluor, Chlor und Brom, substituiert sein können, wie Anilin, 2-, 3-, 4-Methylanilin, 2-, 3-, 4-Methoxyanilin, 2-, 3-, 4-Chloranilin, 2-, 3-, 4-Bromanilin,
C₆-C₁₀-Aryl-C₁-C₄-alkylamine, wobei die Arylalkyl-Reste bis zu dreifach mit Resten, ausgewählt aus der Gruppe bestehend aus C₁-C₄-Alkyl, C₁-C₄-Alkoxy und Halogen wie Fluor, Chlor und Brom, substituiert sein können, wie Benzylamin, Phenethylamin und Phenylpropylamin.

Die Imidisierung kann man beispielsweise nach einem der in den US-A 2,146,209 und EP-B 234,726 genannten Verfahren durchführen.

Ein besondere Ausführungsform besteht darin, daß man eine Mischung, bestehend aus Acrylat-Polymer und einem Amin oder mehreren der oben genannten Amine mit einem Siedepunkt von wenigstens 70°C, bevorzugt von mindestens 100°C, in einem Lösungsmittel oder einem Lösungsmittelgemisch unter Sauerstoffausschluß erhitzt. Besonders bevorzugt destilliert man dabei den bei der Reaktion entstehenden Alkohol, in der Regel Methanol, kontinuierlich ab, um Nebenreaktionen wie Ether-Bildung, Amin-Alkylierung und Ester-Verseifung zu unterdrücken.

Gegen Ende der Reaktion kann man gegebenenfalls überschüssiges Amin ebenfalls destillativ entfernen.

Die Amine kann man dabei gleich zu Beginn vorlegen oder beispielsweise kontinuierlich in dem Maße, wie sie verbraucht werden, zugeben.

Die Reaktion kann man sowohl kontinuierlich als auch diskontinuierlich durchführen.

Das Gewichtsverhältnis des eingesetzten Amins bzw. der Amine zu Acrylat- Polymer wählt man im allgemeinen im Bereich von 1:1 bis 400:1, bevorzugt von 1:1 bis 200:1.

Als Lösungsmittel kann man prinzipiell alle aprotischen, polaren Lösungsmittel wie
N,N'-disubstituierte, cyclische oder acyclische Carbonsäureamide wie Dimethylformamid, Diethylformamid, Dimethylacetamid, Diethylacetamid,
N-Methyl-2-pyrrolidon, N-Ethyl-2-pyrrolidon,
N,N,N',N'-tetrasubstituierte, cyclische oder acyclische Harnstoffe wie Tetramethylharnstoff,
N-substituierte, cyclische oder acyclische (Poly)Amine wie Dicyclohexylmethylamin, Dimethylcyclohexylamin, N,N,N',N'-Tetramethylethylendiamin, N,N,N',N'-Tetramethylhexamethylendiamin
hochsiedende Ether wie Ethylenglykoldimethylether, Diethylenglykoldimethylether
Alkylencarbonate wie Ethylencarbonat, Propylencarbonat,
sowie andere übliche aprotische und polare Lösungsmittel wie Hexamethylphosphorsäuretriamid, Nitroalkane wie Nitromethan, Dimethylsulfoxid, Diphenylsulfoxid und Sulfolan,
sowie deren Mischungen, verwenden. Bevorzugt sind N-Methylpyrrolidon, Dimethylformamid, Dimethylsulfoxid und Sulfolan, besonders bevorzugt ist N-Methyl-pyrrolidon.

Das Gewichtsverhältnis von verwendetem Lösungsmittel bzw. Lösungsmittelgemisch zu Polymer liegt in der Regel im Bereich von 1:1 bis 100:1, bevorzugt von 1:1 bis 10:1.

Die Reaktion kann man sowohl mit als auch ohne Lösungsmittel durchführen, wobei man bei der Imidierung auf einem Extruder vorteilhaft ohne Lösungsmittel arbeitet. Bei der Herstellung der Poly(meth)acrylimide ohne Lösungsmittel stellt man nach der Reaktion zweckmäßig Lösungen mit den oben genannten Lösungsmitteln her.

Die Reaktionstemperatur liegt in der Regel im allgemeinen in Bereich von 100 bis 350°C, bevorzugt im Bereich von 120 bis 270°C.

Der Reaktionsdruck ist in der Regel unkritisch. Man arbeitet im allgemeinen in Lösung im Bereich von 80 bis 250 kPa, bevorzugt unter Atmosphärendruck.

Die Wahl des pH-Bereiches ist ebenfalls unkritisch und liegt in der Regel wegen der eingesetzten Amine oberhalb von pH 7.

Die Reaktionszeit liegt in der Regel im Bereich von 0,01 bis 100 h, bevorzugt von 0,05 bis 20 h.

Des weiteren kann man dem Reaktionsgemisch Katalysatoren in Mengen im Bereich von 0,01 bis 10 Gew.-%, bezogen auf das eingesetzte Polymer, zur Beschleunigung der Reaktion zusetzen. Beispielhaft seien genannt
tertiäre Amine wie Tricyclohexylamin,
substituierte Guanidine wie 1,1,3,3-Tetramethylguanidin, 1,3-Diphenylguanidin,
tetrasubstituierte Alkylammoniumverbindungen wie Trimethylstearylammoniumchlorid,
organische Titanverbindungen wie Tetrapropoxytitan, Tetrabutoxytitan,
organische Zinnverbindungen wie Dibutylzinnoxid, Dibutylzinndidodecanat,
aromatische Amine wie Chinolin, Isochinolin, 4-Benzylpyridin, 4-Phenylpyridin, 2-Hydroxypyridin, 1,3-, 1,4- und 2,3-Benzodiasin, 2,2'-, 2,3'- und 2,4'-Bipyridyl,
Imide wie N,N'-Dicyclohexylcarbodiimid,
sowie Antimontrioxid, Zinndioxid, Natriumamid, Natrium- und Kaliumalkoholate wie Natrium- und Kaliummethanolat, Ammoniumchlorid und Ammoniumiodid.

Das so gebildete Polymerisat ist in der Regel in den obengenannten Lösungsmitteln löslich, wobei es jedoch von Vorteil sein kann, wenn ein Teil des Polymerisats als Feststoff vorliegt. Die Reaktionslösungen können direkt im erfindungsgemäßen Verfahren eingesetzt werden. Es versteht sich von selbst, daß auch Lösungen mit auf anderem Wege hergestellten Poly (meth) acrylimiden eingesetzt werden können.

Vorzugsweise verwendet man Lösungen, die im allgemeinen eine Viskosität von 500 bis 50.000, bevorzugt von 1.000 bis 10.000 mPa*sec (gemessen als reine Lösung bei Raumtemperatur), aufweisen.

Den Feststoffgehalt dieser Lösungen kann dabei man in der Regel im Bereich von 0 bis 60 Gew. -%, bevorzugt von 25 - 55 Gew. -% wählen.

Für die Lösungen der Poly (meth) acrylimide wählt man für die nachfolgenden Schritte des erfindinngsgemäßen Verfahrens im allgemeinen eine Temperatur im Bereich von 15 bis 250°C, bevorzugt von 40 bis 180°C, besonders bevorzugt von 80 bis 120°C.

Im Schritt A) des erfindungsgemäßen Verfahrens werden die Lösungen der Polymerisate mit einer Düse in eine Vielzahl von Flüssigkeitsstrahlen zerlegt. Dabei ist darauf zu achten, daß der Durchsatz nicht so hoch gewählt wird, daß bereits beim Austritt aus der Düse ein Zerstäuben erfolgt, da dann ein sehr ungleichmäßiges Tropfenspektrum erhalten wird.

Als bevorzugte Düsen werden Kapillaren mit einem Durchmesser von 0,1 bis 2,0 mm, insbesondere von 0,3 bis 1,0 mm und einem Durchsatz von 10 bis 3000 g/h, insbesondere von 400 bis 2000 g/h pro Kapillare eingesetzt. Es versteht sich, daß mehrere Kapillaren parallel geschaltet werden können. Der Druck vor der Kapillare liegt im allgemeinen im Bereich von 100 bis 10.000 kpa, insbesondere von 1000 bis 5000 kPa.

Zur Erzeugung des Drucks kann man die üblichen Methoden und Vorrichtungen wie Kolben-, Membran- oder Zahnradpumpen zum Einsatz bringen.

Nach Erzeugung des Flüssigkeitsstrahls wird durch Strahlzerfall die Bildung gleichmäßiger, d.h. gleich großer Tropfen, herbeigeführt. Dies kann z.B. einfach durch Vorsehen einer ausreichenden Wegstrecke zwischen Austritt aus der Düse und Eintritt in das Fällungsbad erfolgen. Tritt nämlich ein Flüssigkeitsstrahl aus einer Kapillare zunächst als glatter Faden oder Strahl aus, so bilden sich nach einer gewissen Strecke Wellen, die zum Zerfall des Strahl in gleich große Tropfen führen.

Andere Möglichkeiten für die technische Durchführung des gesteuerten Strahlzerfalls sind das Versetzen der Düse in Schwingungen oder das Pulsieren der Flüssigkeit in einer feststehenden Düse.

Das Versetzen der Kapillare in Schwingungen kann longitudinal oder transversal erfolgen. Zur Erzeugung longitudinaler Schwingungen kann die Düse z.B. an einer Membran befestigt werden, die über einen Schwinger mit Hilfe eines Tongenerators in longitudinale Schwingungen versetzt wird. Anstelle des Tongenerators kann auch ein piezoelektrischer Wandler eingesetzt werden.

Transversale Schwingungen werden im allgemeinen mit Vibratoren erzeugt.

Eine andere Möglichkeit des Strahlzerfalls ist das Pulsieren der Flüssigkeit in einer feststehenden Kapillare, z.B. durch einen Oszillator. Dabei durchläuft die zertropfende Flüssigkeit eine von einem Oszillator beschriebene Vibrationskammer und zerfällt beim Austritt aus der Kapillare.

Die Frequenzen der Schwingungen bzw. Vibrationen liegen im allgemeinen im Bereich von 5 bis 5000 s^{-1.}

Durch die Anwendung solcher periodischer Störungen ist es möglich, die Wegstrecke zwischen Austritt aus der Düse und Eintritt in das Fällungsbad zu verkürzen, ohne daß die Gleichmäßigkeit der Tropfengröße verschlechtert wird.

Aus dem Vorstehenden ergibt sich, daß die zwischen Austritt aus der Düse und Eintritt in das Fällungsbad liegende Wegstrecke (= Fallhöhe) in weiten Bereichen - abhängig von der Verfahrensvariante - variieren kann. Im allgemeinen haben sich Fallhöhen im Bereich von 0,1 bis 2 m, insbesondere von 0,2 bis 1,5 m als vorteilhaft erwiesen, wobei aus den vorstehend genannten Gründen die unteren Werte beim Strahlzerfall durch periodische Störungen gelten.

In Schritt C) werden die in Schritt B) erzeugten Tropfen in ein Fällungsbad eingebracht, welches eine Flüssigkeit enthält, in der sich die Polymerisate nicht lösen. Da die Düse in der Regel oberhalb des Fällungsbades angebracht ist, gelangen die aus dem Strahl hergestellten Tropfen durch die Schwerkraft in das Fällungsbad, so daß keine speziellen Vorrichtungen hierfür erforderlich sind.

Als Nicht-Lösungsmittel (Fällungsmittel) eignen sich z.B. Wasser und Alkohole ROH mit 1 bis 8 C-Atomen, wie Methanol, Ethanol, Pentanol etc. sowie Gemische aus Wasser und derartigen Alkoholen, wobei Wasser mit einem Gehalt von 0 bis 50 Gew.-% an Methanol bevorzugt ist.

Die Temperatur des Fällungsbades ist an sich nicht kritisch und liegt im allgemeinen zwischen Raumtemperatur und einer Temperatur dicht unter dem Siedepunkt des Fällungsmediums. Um Verluste durch Verdampfen zu vermeiden, kann die gesamte Vorrichtung (Düse und Fällungsbad) als geschlossenes System ausgelegt werden und unter Schutzgas oder geringem Überdruck gehalten werden. Es ist jedoch auch möglich und häufig vorteilhaft bei Normaldruck zu arbeiten.

Im abschließenden Schritt D) werden die in den beim Ausfällen gebildeten Polymerteilchen noch enthaltenen Lösungsmittelreste und sonstige Verunreinigungen nach Abtrennung der Polymerteilchen aus dem Fällungsmedium entfernt.

Dies kann nach an sich bekannten und in der Literatur beschriebenen Verfahren zur Reinigung von Feststoffpartikeln erfolgen. Nur beispielsweise seien hier Waschen und anschließendes Trocknen (falls keine schwerflüchtigen Verunreinigungen mehr vorhanden sind, kann unter Umständen die Reinigung direkt durch Verdampfen des Lösungsmittels erfolgen) und bekannte Extraktionsverfahren genannt.

Als besonders vorteilhaft hat es sich erwiesen, die Entfernung des Lösungsmittels und evtl. vorhandener Verunreinigungen mit Hilfe der Fest-Flüssig-Extraktion durchzuführen. Als Lösungsmittel sind z.B. Wasser, Alkohole mit 1 bis 8 C-Atomen, insbesondere Methanol oder Ethanol, Aceton sowie deren Mischungen verwendbar.

Die Bedingungen bei der Extraktion hängen natürlich von der Art des gewählten Extraktionslösungsmittels ab, können aber ansonsten in weiten Grenzen variiert werden. So kann unter Überdruck oder bei verringertem Druck und gegebenenfalls unter Schutzgasatmosphäre gearbeitet werden. Im allgemeinen wird bei atmosphärischen Druck gearbeitet.

Als Schutz- oder Inertgase eignen sich Stickstoff oder Edelgase, insbesondere Argon.

Die Extraktionstemperatur hängt vom gewählten Extraktionsmittel ab und liegt vorzugsweise dicht unter dem Siedepunkt desselben.

Nach Entfernung des Extraktionslösungsmittels können die teilchenförmigen Polymerisate in an sich bekannter Weise konfektioniert und für den weiteren Gebrauch vorbereitet werden.

Nach dem erfindungsgemäßen Verfahren erhält man teilchenförmige Polymerisate mit sehr enger Größenverteilung, d.h. sehr gleichmäßige Teilchen, was sich bei der weiteren Konfektionierung vorteilhaft auswirkt.

Innerhalb eines Intervalls von ± 10 % der mittleren Teilchengröße liegt im allgemeinen die Größe von mindestens 70 % aller Teilchen, insbesondere von mindestens 75 %.

Das erfindungsgemäße Poly(meth)acrylimid kann man nach üblichen Methoden verarbeiten, z.B. durch Spritzguß, Extrusion oder Sintern zur Herstellung von Formkörpern.

Im Gegensatz zu den bisherigen Verfahren fallen bei der erfindungsgemäßen Methode keine voluminösen, Lösungsmittel enthaltende Polymerisate an. Ferner kommt das Verfahren im Gegensatz zur destillativen Aufarbeitung von Poly(meth)acrylimiden mit deutlich weniger Lösungsmittel aus.

### Beispiele

### Beispiel 1

In einem Reaktionsgefäß mit Füllkörperkolonne wurde eine Mischung aus 200 g PMMA (aus 99 Gew.-% MMA und 1 Gew.-% MA mit einem mittleren Molekulargewicht von 115 000 g/mol), 150 g Cyclohexylamin und 650 g N-Methylpyrrolidon wurde unter Stickstoff zum Sieden erhitzt. Nach etwa 1 h konnte Methanol am Kopf der Kolonne abgenommen werden, wobei während der nächsten 6 h so verfahren wurde, daß die Temperatur am Kolonnenkopf nicht höher als 70°C betrug. Hierbei wurden 70 g Destillat erhalten. Anschließend wurde das im Überschuß vorhandene Amin abdestilliert und das Polymethacrylimid in Methanol ausgefällt und anschließend getrocknet.

### Beispiele 2 und 3

Beispiel 1 wurde wiederholt mit dem Unterschied, daß anstelle von 650 g N-Methylpyrrolidon in Beispiel 2 350 g, und in Beispiel 3 250 g N-Methylpyrrolidon eingesetzt wurden. Hierdurch wurden unterschiedliche Feststoffgehalte (s. Tabelle) erhalten.

Die so erhaltenen PMI-Lösungen (Feststoffgehalt und Imidisierungsgrad siehe Tabelle) wurden mit Hilfe einer Zahnradpumpe über eine Kapillardüsenplatte mit einem Kapillardurchmesser von 0,8 mm in Flüssigkeitsstrahlen zerlegt. Der Durchsatz pro Kapillare betrug 1600 g/h. Die Wegstrecke vom Kapillaraustritt bis zum Fällbad, enthaltend Wasser mit einer Temperatur von 80°C als Fällmittel, betrug 0,7 m.

Die erfindungsgemäß hergestellten Teilchen wurden abgetrennt, dann mit Wasser extrahiert und anschließend getrocknet. 75% aller Teilchen hatten einen Durchmesser von 10% um den Mittelwert (s. Tabelle). Die Teilchen hatten eine offenzellige Porenstruktur.

**Tabelle**

| | Lösungsmittel | Feststoff [%] | Temp. [°C] | Druck [bar] | Polymerteilchen Kugelform |
|---|---|---|---|---|---|
| 1 | NMP¹) | 25 | 27 | 15 | feste Kugeln Ø 1,5 mm |
| 2 | NMP | 37 | 85 | 20 | feste Kugeln Ø 1,6 mm |
| 3 | NMP | 44 | 120 | 30 | feste Kugeln Ø 1,6 mm |

| | | | | | |
|---|---|---|---|---|---|
| ¹⁾ NMP = N-Methylpyrrolidon | | | | | |

## Patentansprüche

1. Verfahren zur Erzeugung teilchenförmiger Polymerisate, erhältlich durch Umsetzung eines Polymeren auf Basis von C₁-C₂₂-Alkylestern der Acryl- und/oder Methacrylsäure mit Ammoniak und/oder mindestens einem primären Amin RNH₂, dadurch gekennzeichnet, daß man
A) eine Lösung der Polymerisate aus einer Düse in einer Vielzahl von Flüssigkeitsstrahlen austreten läßt,
B) durch Versetzen der Düse in longitudinale oder transversale Schwingungen oder durch Pulsieren der Flüssigkeit in der Düse oder durch Vorsehen einer Wegstrecke zwischen Austritt aus der Düse und Eintritt in ein Fällungsbad einen Strahlzerfall des Flüssigkeitsstrahls in Tropfen mit enger Korngrößenverteilung herbeiführt,
C) die erzeugten Tropfen durch Einbringen in ein Fällungsbad, welches eine Flüssigkeit enthält, in der sich die Polymerisate nicht lösen, ausfällt und
D) in den Polymerpartikeln enthaltene Lösungsmittelreste und sonstige Verunreinigungen entfernt.

2. Verwendung der nach Anspruch 1 erzeugten teilchenförmigen Polymerisate zur Herstellung von Formkörpern, Fasern und Folien.

## Claims

1. A process for producing particulate addition polymers obtainable by reacting polymers based on C₁-C₂₂-alkyl esters of acrylic and/or methacrylic acid with ammonia and/or at least one primary amine RNH₂, which comprises
A) exiting a solution of the addition polymers from a nozzle in a multiplicity of jets of liquid,
B) breaking up the jets of liquid into droplets having a narrow size distribution by setting the nozzle swinging longitudinally or transversely or by pulsing the liquid inside the nozzle or by providing some distance between the point of exit from the nozzle and the point of entry into a coagulating bath,
C) precipitating the resulting droplets by introducing them into a coagulating bath which contains a liquid in which the addition polymers do not dissolve, and
D) stripping the polymer particles of solvent residues and other impurities.

2. The use of the particulate addition polymers produced as claimed in claim 1 for manufacturing moldings, fiber, film and sheet.

## Revendications

1. Procédé de production sous forme de particules de produits de polymérisation obtenus par réaction d'un polymère à base d'esters alkyliques en C₁-C₂₂ de l'acide acrylique et/ou méthacrylique avec de l'ammoniac et/ou au moins une amine primaire RNH₂, caractérisé en ce que
A) on fait sortir d'une filière une solution du produit de polymérisation en une multiplicité de jets de liquide,
B) par la mise en oscillations longitudinales ou transversales de la filière ou par la production de pulsations du liquide dans la filière ou par la disposition d'un parcours entre la sortie de la filière et l'entrée dans un bain de précipitation, on produit une dissociation du jet de liquide en gouttes ayant une répartition dimensionnelle étroite,
C) on précipite les gouttes produites en les introduisant dans un bain de précipitation contenant un liquide dans lequel le produit de polymérisation ne se dissout pas, et
D) on élimine les restes de solvant et les autres impuretés contenus dans les particules de polymère.

2. Utilisation des produits de polymérisation sous forme de particules, produits selon la revendication 1 pour la fabrication de corps moulés, de fibres et de feuilles.
